# EUROPEAN PATENT APPLICATION

(11) **EP 2 514 574 A1**
(43) Date of publication of application: **24.10.2012**
(21) Application number: 12156829.9
(22) Date of filing: 24.02.2012
(51) Int. Cl.: B25J 17/02

(54) **Robot**

(30) Priority: 19.04.2011 JP 2011092837
(71) Applicant: Kabushiki Kaisha Yaskawa Denki, Kitakyushu-shi, Fukuoka 806-0004 (JP)
(72) Inventor: Oka, Takenori, Kitakyushu-shi, Fukuoka 806-0004 (JP); Itou, Masato, Kitakyushu-shi, Fukuoka 806-0004 (JP); Kinoshita, Yusuke, Kitakyushu-shi, Fukuoka 806-0004 (JP); Okahisa, Manabu, Kitakyushu-shi, Fukuoka 806-0004 (JP)
(74) Representative: Viering, Jentschura & Partner

(57) **Abstract**

This robot (1) includes an arm (142) and a joint (15) provided on one end portion of the arm, and either the arm or the joint is provided with an end effector driving source (23) to operate an end effector (17) mounted to the arm through the joint.

## Description

### BACKGROUND OF THE INVENTION

### Field of the Invention

The present invention relates to a robot, and more particularly, it relates to a robot including a joint.

### Description of the Background Art

A robot including a joint is known in general, as disclosed in Japanese Patent Laying-Open No. 2010-094749, for example.

The aforementioned Japanese Patent Laying-Open No. 2010-094749 discloses a robot including an arm and a wrist (joint) provided on one end portion of the arm. The wrist of this robot is formed to be capable of operating about two axes of a B-axis and a T-axis orthogonal to the B-axis.

The structure of a robot including an arm and a joint in which an end effector is mounted to the arm through the joint is known in general.

If an end effector is mounted to the arm through the wrist (joint) in the robot according to the aforementioned Japanese Patent Laying-Open No. 2010-094749, a driving source (servomotor or the like) to operate the end effector as well as the end effector is conceivably provided on the forward end of the robot. In this case, the weight of the robot on the forward end side (side of the end effector) is increased, and hence the moment of inertia based on the base portion of the arm is increased. Consequently, the operating accuracy of the robot is disadvantageously reduced.

### SUMMARY OF THE INVENTION

The disclosure has been proposed in order to solve the aforementioned problem, and an object of the disclosure is to provide a robot capable of inhibiting reduction in operating accuracy in the structure in which an end effector is mounted.

In order to attain the aforementioned object, a robot according to an aspect of the disclosure includes an arm, a joint provided on one end portion of the arm, and an end effector driving source operating an end effector mounted to the arm through the joint, provided in at least either the arm or the joint.

As hereinabove described, the robot according to the aspect of the disclosure is provided with the end effector driving source operating the end effector mounted to the arm through the joint, provided in at least either the arm or the joint, whereby the weight of the robot on the forward end side (side of the end effector) is reduced by the weight of the end effector driving source so that the moment of inertia based on the base portion of the arm can be reduced, dissimilarly to a case where the end effector driving source is provided on the forward end side (side of the end effector) of the robot. Thus, the operating accuracy of the robot can be inhibited from reduction in the structure in which the end effector is mounted.

The foregoing and other objects, features, aspects and advantages of the disclosure will become more apparent from the following detailed description of the disclosure when taken in conjunction with the accompanying drawings.

### BRIEF DESCRIPTION OF THE DRAWINGS

Fig. 1 is a schematic diagram for illustrating the overall structure of a robot according to each of first and second embodiments;
Fig. 2 is a partial sectional view showing a wrist joint of the robot according to the first embodiment;
Fig. 3 is a side elevational view of the wrist joint of the robot according to the first embodiment as viewed from an X1 side in Fig. 2;
Fig. 4 is a side elevational view of the wrist joint of the robot according to the first embodiment as viewed from an X2 side in Fig. 2;
Fig. 5 is a sectional view taken along the line 400-400 in Fig. 2;
Fig. 6 is a front elevational view showing a hand of the robot according to the first embodiment;
Fig. 7 is a partial sectional view showing a wrist joint of the robot according to the second embodiment;
Fig. 8 is a partial sectional view showing a wrist joint of a robot according to a third embodiment;
Fig. 9 is a side elevational view of the wrist joint of the robot according to the third embodiment as viewed from an X1 side in Fig. 8; and
Fig. 10 is a side elevational view of the wrist joint of the robot according to the third embodiment as viewed from an X2 side in Fig. 8.

### DESCRIPTION OF THE PREFERRED EMBODIMENTS

Embodiments are now described with reference to the drawings.

### (First Embodiment)

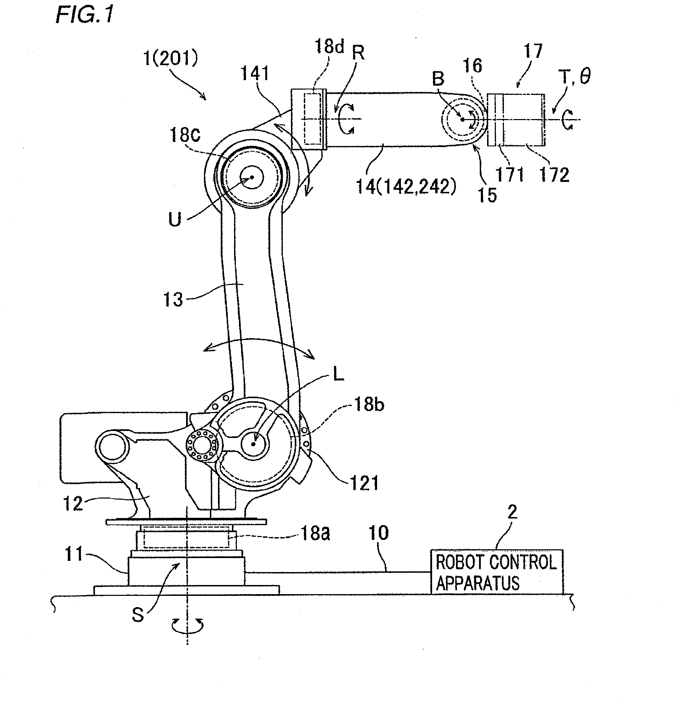

First, the structure of a robot 1 according to a first embodiment is described with reference to Fig. 1.

The robot 1 according to the first embodiment is a six-axis (S-axis, L-axis, U-axis, R-axis, B-axis, and T-axis) vertical articulated robot, as shown in Fig. 1. The robot 1 includes a turn base 11, an arm support portion 12, a lower arm 13, an upper arm 14, a wrist joint 15, an arm end 16, and a hand 17. The hand 17 is an example of the "end effector".

The lower surface of the turn base 11 is fixed to a mounting surface (floor surface, wall surface, ceiling surface, mounting surface of a traveling carriage, etc.), and the turn base 11 supports the arm support portion 12 on the upper surface side so as to allow the arm support portion 12 to rotate in a horizontal plane. The turn base 11 and the arm support portion 12 are coupled to each other through a speed reducer 18a, and the arm support portion 12 is so formed as to be relatively rotated (turned) in the horizontal plane with respect to the turn base 11 by a servomotor (not shown). Thus, an S-axis joint relatively rotating the turn base 11 and the arm support portion 12 about the S-axis (turn axis) is formed.

The arm support portion 12 is set on the turn base 11, and so formed as to support the whole arm of the robot 1 including the lower arm 13 and the upper arm 14. The arm support portion 12 rotatably supports the lower arm 13 through a speed reducer 18b at a lower arm mounting portion 121 extending upward. The lower arm mounting portion 121 and the lower arm 13 are opposed to each other horizontally, and so coupled to each other as to be relatively rotatable about a rotation axis (L-axis) extending horizontally. The lower arm 13 is so turningly driven as to incline forward or rearward in a vertical plane with respect to the lower arm mounting portion 121 (arm support portion 12) by a servomotor (not shown) connected to the speed reducer 18b. Thus, an L-axis joint relatively rotating the arm support portion 12 and the lower arm 13 about the L-axis (lower arm axis) is formed.

The lower arm 13 supports the upper arm 14 in a turnable manner at an upper end portion whereas the same is supported in an anteroposteriorly turnable manner by the arm support portion 12 at a lower end portion. The lower arm 13 is so coupled to a first upper arm portion 141 of the upper arm 14 through a speed reducer 18c as to be opposed to the first upper arm portion 141 horizontally at the upper end portion. The upper arm 14 is turningly driven vertically in the vertical plane with respect to the lower arm 13 by a servomotor (not shown) connected to the speed reducer 18c. Thus, a U-axis joint relatively rotating the lower arm 13 and the upper arm 14 about the U-axis (upper arm axis) is formed.

The upper arm 14 supports the wrist joint 15 at a second upper arm portion 142 on a first end (forward end) whereas the same is supported in a vertically turnable manner by the lower arm 13 at the first upper arm portion 141 on a second end (base portion). The first upper arm portion 141 is coupled to the second upper arm portion 142 through a speed reducer 18d, and supports the second upper arm portion 142 so as to allow the second upper arm portion 142 to rotate about a coupling axis (R-axis). The second upper arm portion 142 is rotatingly driven by a servomotor (not shown) connected to the speed reducer 18d. Thus, an R-axis joint relatively rotating the first upper arm portion 141 and the second upper arm portion 142 about the R-axis (second upper arm rotation axis) is formed. The second upper arm portion 142 is an example of the "arm".

The wrist joint 15 is provided on the forward end of the upper arm 14 (second upper arm portion 142). The wrist joint 15 is provided with the arm end 16. The wrist joint 15 is so formed as to be capable of rotating the hand 17 mounted to the arm end 16 about the B-axis (wrist bending axis) with respect to the second upper arm portion 142. The wrist joint 15 is also so formed as to be capable of rotating the hand 17 about the T-axis (arm end rotation axis) orthogonal to the B-axis with respect to the second upper arm portion 142. The detailed structure of the wrist joint 15 will be described later. The wrist joint 15 is an example of the "joint". The B-axis and the T-axis are examples of the "first axis" and the "second axis", respectively.

The robot 1 is connected to a robot control apparatus 2 through a robot instruction cable 10. The robot control apparatus 2 is so formed as to control a plurality of servomotors driving each joint of the robot 1 to cause the robot 1 to perform prescribed operations. The robot control apparatus 2 is an example of the "control apparatus".

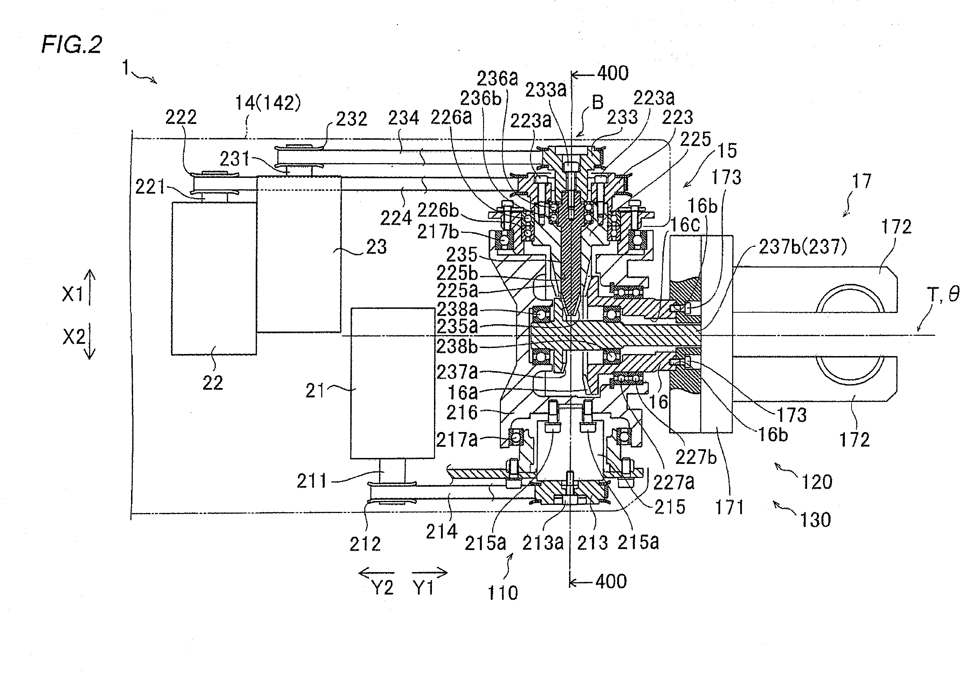

Next, the structure of the wrist joint 15 is described in detail with reference to Figs. 2 to 5.

As shown in Figs. 2 to 4, a B-axis motor 21 rotating the hand 17 mounted to the arm end 16 about the B-axis and a T-axis motor 22 rotating the hand 17 about the T-axis are provided inside the second upper arm portion 142. A θ-axis motor 23 to cause the hand 17 to perform a gripping operation is also provided inside the second upper arm portion 142. The B-axis motor 21, the T-axis motor 22, and the θ-axis motor 23 are arranged on the rear side (Y2 side) with respect to the wrist joint 15 in the second upper arm portion 142. Furthermore, the B-axis motor 21, the T-axis motor 22, and the θ-axis motor 23 each include a servomotor, and are so formed that driving thereof is controlled by the robot control apparatus 2. The B-axis motor 21, the T-axis motor 22, and the θ-axis motor 23 are examples of the "first joint driving source", the "second joint driving source", and the "end effector driving source", respectively.

### (B-Axis Rotation Mechanism)

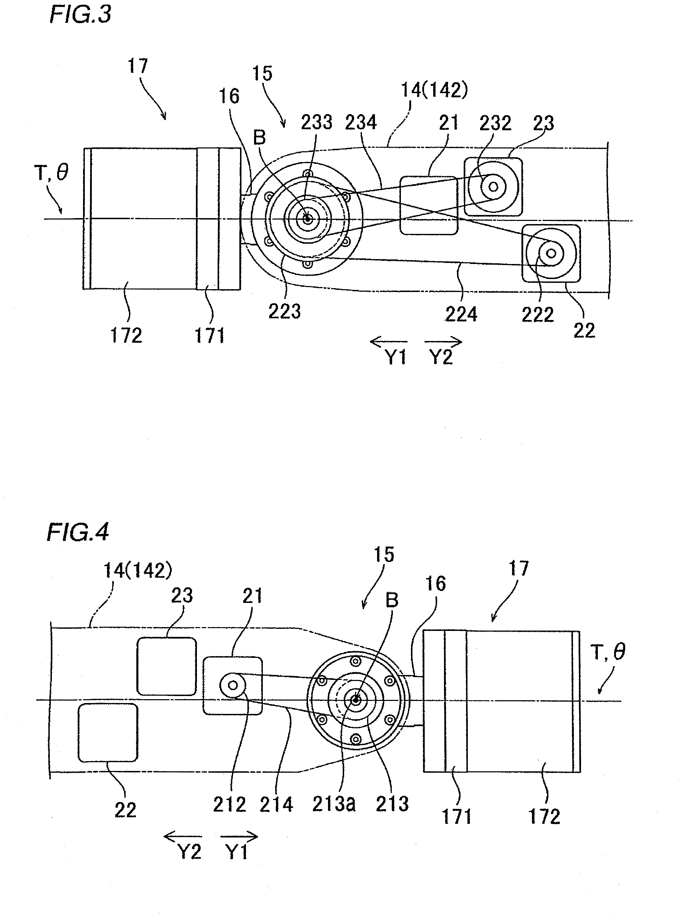

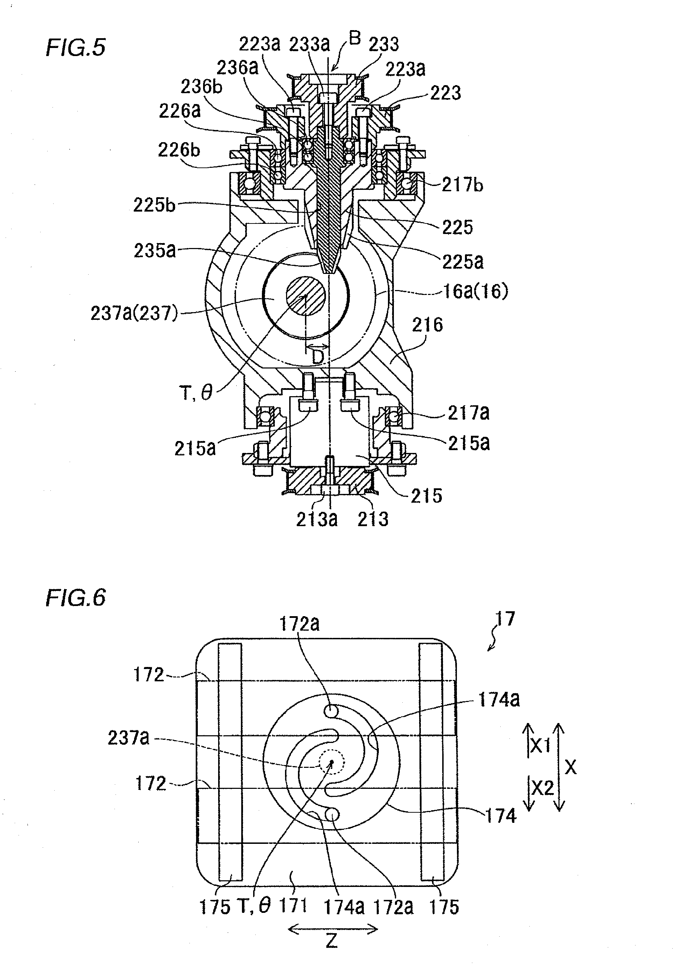

A pulley 212 is mounted on an output shaft 211 of the B-axis motor 21, as shown in Fig. 2. As shown in Figs. 2 and 4, a transmission belt 214 circularly formed is wound on the pulley 212 and a pulley 213 rotating about the B-axis as a rotation axis. The pulley 213 is coupled to an input shaft (not shown) of a speed reducer 215 with a screw member 213a, as shown in Figs. 2 and 5. An output shaft (not shown) of the speed reducer 215 is coupled to a B-axis rotation portion 216 with screw members 215a. Thus, the driving force of the B-axis motor 21 is transmitted to the B-axis rotation portion 216 while the transmission speed thereof is reduced by the speed reducer 215. Annular bearings 217a and 217b are provided on respective ends of the B-axis rotation portion 216 in the extensional direction of the B-axis. The B-axis rotation portion 216 is supported by the bearings 217a and 217b to be rotatable about the B-axis (as a rotation axis) with respect to the second upper arm portion 142. Due to this structure, the B-axis rotation portion 216 is rotated about the B-axis (as a rotation axis) with respect to the second upper arm portion 142 by the driving force of the B-axis motor 21. A B-axis rotation mechanism 110 is constituted mainly by the speed reducer 215 and the B-axis rotation portion 216, as described above. The B-axis rotation mechanism 110 is an example of the "first rotation mechanism".

### (T-Axis Rotation Mechanism)

A pulley 222 is mounted on an output shaft 221 of the T-axis motor 22, as shown in Fig. 2. As shown in Figs. 2 and 3, a transmission belt 224 circularly formed is wound on the pulley 222 and a pulley 223 rotating about the B-axis as a rotation axis. The pulley 223 is coupled to a T-axis driving portion 225 with screw members 223a, as shown in Figs. 2 and 5. The T-axis driving portion 225 is arranged along the B-axis, and supported by annular bearings 226a and 226b to be rotatable about the B-axis (as a rotation axis) with respect to the second upper arm portion 142. Due to this structure, the T-axis driving portion 225 is rotated about the B-axis (as a rotation axis) with respect to the second upper arm portion 142 by the driving force of the T-axis motor 22. The T-axis driving portion 225 is an example of the "second driving portion".

A substantially conical gear portion 225a is formed on a point of the T-axis driving portion 225. The gear portion 225a is so formed as to engage (mesh) with a substantially conical gear portion 16a formed on an end portion of the arm end 16 opposite to the side mounted with the hand 17 (on the Y2 side in Fig. 2). Specifically, the gear portion 225a and the gear portion 16a constitute a hypoid gear (registered trademark) having a high reduction ratio. In other words, a T-axis rotation mechanism 120 has a deceleration function at a meshing portion of the T-axis driving portion 225 and the arm end 16. As shown in Fig. 5, the gear portion 225a of the T-axis driving portion 225 engages with the gear portion 16a at a position deviating by a distance D in a direction orthogonal to the B-axis from the rotation axis (T-axis) of the gear portion 16a of the arm end 16, as viewed from the axial direction of the T-axis. In other words, the rotation axis (B-axis) of the gear portion 225a of the T-axis driving portion 225 and the rotation axis (T-axis) of the gear portion 16a of the arm end 16 are separated from each other by the distance D in the direction orthogonal to the B-axis, as viewed from the axial direction of the T-axis. The gear portion 225a of the T-axis driving portion 225 is so formed as to engage with the gear portion 16a of the arm end 16 on the forward end side (Y1 side in Fig. 2) of the robot 1 with respect to the rotation axis (B-axis). The arm end 16 is an example of the "second follower". The T-axis driving portion 225 has a through-hole 225b penetrating in the extensional direction of the B-axis, and is formed in a hollow shape.

The arm end 16 is supported by the B-axis rotation portion 216 of the B-axis rotation mechanism 110 to be rotatable about the T-axis (as a rotation axis). Specifically, the arm end 16 is arranged along the T-axis orthogonal to the B-axis, and supported by annular bearings 227a and 227b to be rotatable about the T-axis (as a rotation axis) with respect to the B-axis rotation portion 216, as shown in Fig. 2. Due to this structure, the T-axis motor 22 rotates the T-axis driving portion 225 about the B-axis to rotate the arm end 16 about the T-axis. Screw holes 16b to mount the hand 17 are provided in the forward end of the arm end 16. The arm end 16 has a through-hole 16c penetrating in the extensional direction of the T-axis, and is formed in a hollow shape. The T-axis rotation mechanism 120 is constituted mainly by the T-axis driving portion 225 and the arm end 16, as described above. The T-axis rotation mechanism 120 is an example of the "second rotation mechanism".

### (θ-Axis Rotation Mechanism)

A pulley 232 is mounted on an output shaft 231 of the θ-axis motor 23, as shown in Fig. 2. As shown in Figs. 2 and 3, a transmission belt 234 circularly formed is wound on the pulley 232 and a pulley 233 rotating about the B-axis as a rotation axis. The pulley 233 is coupled to a θ-axis driving portion 235 with a screw member 233a, as shown in Figs. 2 and 5. The θ-axis driving portion 235 is arranged along the B-axis inside the through-hole 225b of the T-axis driving portion 225. Furthermore, the θ-axis driving portion 235 is supported by annular bearings 236a and 236b to be rotatable about the B-axis (as a rotation axis) with respect to the T-axis driving portion 225. Due to this structure, the θ-axis driving portion 235 is rotated about the B-axis (as a rotation axis) with respect to the T-axis driving portion 225 by the driving force of the θ-axis motor 23. The θ-axis driving portion 235 is an example of the "first driving portion".

A substantially conical gear portion 235a is formed on a point of the θ-axis driving portion 235. The gear portion 235a is so formed as to engage (mesh) with a substantially conical gear portion 237a formed on a θ-axis follower 237. Specifically, the gear portion 235a and the gear portion 237a constitute a hypoid gear (registered trademark) having a high reduction ratio. In other words, a θ-axis rotation mechanism 130 has a deceleration function at a meshing portion of the θ-axis driving portion 235 and the θ-axis follower 237. The hypoid gear (registered trademark) constituted by the gear portion 235a of the θ-axis driving portion 235 and the gear portion 237a of the θ-axis follower 237 has a reduction ratio higher than that of the hypoid gear (registered trademark) constituted by the gear portion 225a of the T-axis driving portion 225 and the gear portion 16a of the arm end 16. The θ-axis follower 237 is an example of the "first follower".

As shown in Fig. 5, the gear portion 235a of the θ-axis driving portion 235 engages with the gear portion 237a at a position deviating by the distance D in the direction orthogonal to the B-axis from the rotation axis (θ-axis) of the gear portion 237a of the θ-axis follower 237, as viewed from the axial direction of the θ-axis. In other words, the rotation axis (B-axis) of the gear portion 235a of the θ-axis driving portion 235 and the rotation axis (θ-axis) of the gear portion 237a of the θ-axis follower 237 are separated from each other by the distance D in the direction orthogonal to the B-axis, as viewed from the axial direction of the θ-axis. As shown in Figs. 2 and 5, the rotation axis (T-axis) of the gear portion 16a of the arm end 16 and the rotation axis (θ-axis) of the gear portion 237a of the θ-axis follower 237 are located on the same axis. Therefore, as shown in Fig. 5, the gear portion 235a of the θ-axis driving portion 235 and the gear portion 225a of the T-axis driving portion 225 engage with the gear portion 237a of the θ-axis follower 237 and the gear portion 16a of the arm end 16, respectively, at positions separated by the same distance D in the direction orthogonal to the B-axis from the T-axis (θ-axis), as viewed from the axial direction of the T-axis (θ-axis). The gear portion 237a of the θ-axis follower 237 is opposed to the gear portion 16a of the arm end 16, as shown in Fig. 2. The gear portion 235a of the θ-axis driving portion 235 is so formed as to engage with the gear portion 237a of the θ-axis follower 237 on a side (Y2 side in Fig. 2) opposite to the forward end side of the robot 1 with respect to the rotation axis (B-axis). The θ-axis is an example of the "third axis".

As shown in Fig. 2, the θ-axis follower 237 is arranged along the θ-axis inside the through-hole 16c of the arm end 16. The θ-axis follower 237 is supported by the B-axis rotation portion 216 of the B-axis rotation mechanism 110 to be rotatable about the θ-axis (as a rotation axis). Specifically, the θ-axis follower 237 is supported by annular bearings 238a and 238b to be rotatable about the θ-axis (as a rotation axis) with respect to the arm end 16 and the B-axis rotation portion 216. Due to this structure, the θ-axis motor 23 rotates the θ-axis driving portion 235 about the B-axis to rotate the θ-axis follower 237 about the θ-axis. The θ-axis rotation mechanism 130 is constituted mainly by the θ-axis driving portion 235 and the θ-axis follower 237, as described above. The θ-axis rotation mechanism 130 is an example of the "drive transmission mechanism". The θ-axis follower 237 has a connection portion 237b connected to the hand 17 in an end portion on the side provided with the hand 17 (Y1 side in Fig. 2). The connection portion 237b is exposed from the wrist joint 15 through the through-hole 16c of the arm end 16 when the hand 17 is not mounted.

Due to the aforementioned structure, the B-axis motor 21 is so driven that the B-axis rotation portion 216 is rotated about the B-axis, followed by rotation of the arm end 16 and the θ-axis follower 237 about the B-axis. In other words, the B-axis rotation portion 216 is rotated about the B-axis to rotate the T-axis and the θ-axis about the B-axis. Thus, the hand 17 mounted to the arm end 16 is rotated about the B-axis by the driving force of the B-axis motor 21. The T-axis motor 22 is so driven that the T-axis driving portion 225 is rotated about the B-axis, followed by rotation of the arm end 16 about the T-axis. Thus, the hand 17 mounted to the arm end 16 is rotated about the T-axis by the driving force of the T-axis motor 22. The θ-axis motor 23 is so driven that the θ-axis driving portion 235 is rotated about the B-axis, followed by rotation of the θ-axis follower 237 about the θ-axis. Thus, the driving force of the θ-axis motor 23 is transmitted to the hand 17 through the connection portion 237b. The B-axis rotation mechanism 110, the T-axis rotation mechanism 120, and the θ-axis rotation mechanism 130 can operate independently of each other.

The hand 17 has a base portion 171 and a pair of finger portions 172, as shown in Figs. 2 to 4 and 6. The base portion 171 is fixedly attached to the forward end of the arm end 16 with screw members 173, as shown in Fig. 2. The base portion 171 is formed in a substantially rectangular shape as viewed from the axial direction of the T-axis (θ-axis). The base portion 171 is provided with a rotation portion 174 in a circular shape as viewed from the axial direction of the T-axis (θ-axis). The rotation portion 174 is connected to the connection portion 237b of the θ-axis follower 237, and so formed as to rotate about the θ-axis with respect to the base portion 171 following rotation of the connection portion 237b about the θ-axis. The rotation portion 174 is provided with a pair of slits 174a formed arcuately as viewed from the axial direction of the T-axis (θ-axis). The pair of slits 174a are arranged to deviate in a radial direction from each other. Specifically, the center of one of the arcuate slits 174a deviates in a direction X1 in Fig. 6 from the θ-axis, and the center of the other of the arcuate slits 174a deviates in a direction X2 in Fig. 6 from the θ-axis.

The pair of finger portions 172 are provided on a surface side (Y1 side in Figs. 2 to 4) of the base portion 171. Furthermore, the pair of finger portions 172 are opposed to each other. The pair of finger portions 172 are formed to be movable in directions in which the finger portions 172 are opposed to each other (direction X in Fig. 6). Specifically, the pair of finger portions 172 are mounted across a pair of rails 175 extending in the direction X, and formed to be movable in the direction X along the pair of rails 175. The pair of finger portions 172 each are provided with a pin 172a protruding toward the base portion 171. The pin 172a of one of the finger portions 172 is inserted into one of the slits 174a, and the pin 172a of the other of the finger portions 172 is inserted into the other of the slits 174a. The rotation portion 174 so rotates that the pin 172a moves in the direction X along the corresponding slit 174a. Thus, the pair of finger portions 172 are moved in directions in which the finger portions 172 approach each other or in directions in which the finger portions 172 separate from each other. In other words, the gripping operation of the hand 17 is performed. Due to this structure, the driving force of the θ-axis motor 23 is transmitted to the hand 17 through the θ-axis rotation mechanism 130 as power to perform a gripping operation.

According to the first embodiment, as hereinabove described, the θ-axis motor 23 to operate the hand 17 is provided in the second upper arm portion 142, whereby the weight of the robot 1 on the forward end side (side of the hand 17) is reduced by the weight of the θ-axis motor 23 so that the moment of inertia based on the base portion of the second upper arm portion 142 can be reduced, dissimilarly to a case where the θ-axis motor 23 is provided on the forward end side (Y1 side in Fig. 2) of the robot 1. Thus, the operating accuracy of the robot 1 can be inhibited from reduction. Furthermore, according to the first embodiment, no driving source (motor) driving the hand 17 may be provided in the hand 17, and hence the hand 17 serving as an end effector can be miniaturized. Thus, work can be performed with the hand 17 in a narrower place.

According to the first embodiment, as hereinabove described, the θ-axis motor 23, the B-axis motor 21, and the T-axis motor 22 are provided in the second upper arm portion 142. According to this structure, all of the θ-axis motor 23, the B-axis motor 21, and the T-axis motor 22 are provided in the second upper arm portion 142, whereby the weight of the robot 1 on the forward end side is inhibited from increase so that the operating accuracy of the robot 1 can be inhibited from reduction, even if the θ-axis motor 23 to operate the hand 17 is further provided in the structure in which the wrist joint 15 can operate about the two axes (B-axis and T-axis).

According to the first embodiment, as hereinabove described, the θ-axis driving portion 235 and the θ-axis follower 237 of the θ-axis rotation mechanism 130 are provided in the wrist joint 15. According to this structure, the θ-axis rotation mechanism 130 and the wrist joint 15 can be arranged in a smaller arrangement space as compared with a case where the θ-axis rotation mechanism 130 is arranged separately from the wrist joint 15, and hence the robot 1 can be miniaturized.

According to the first embodiment, as hereinabove described, in addition to the θ-axis driving portion 235 and the θ-axis follower 237 of the θ-axis rotation mechanism 130, the B-axis rotation mechanism 110 rotating the hand 17 about the B-axis and the T-axis rotation mechanism 120 rotating the hand 17 about the T-axis are further provided in the wrist joint 15. According to this structure, all of the θ-axis rotation mechanism 130, the B-axis rotation mechanism 110, and the T-axis rotation mechanism 120 can be arranged in a smaller arrangement space (wrist joint 15) as compared with a case where the θ-axis rotation mechanism 130, the B-axis rotation mechanism 110, and the T-axis rotation mechanism 120 are arranged at positions separate from each other, and hence the robot 1 can be inhibited from size increase even if the θ-axis rotation mechanism 130 is further provided in the structure including the wrist joint 15 capable of operating about the two axes of the B-axis and the T-axis.

According to the first embodiment, as hereinabove described, the connection portion 237b of the θ-axis follower 237 is formed to be exposed from the wrist joint 15 when the hand 17 is not mounted. According to this structure, the connection portion 237b can be easily connected to the hand 17, and hence workability for mounting the hand 17 can be inhibited from reduction even if the θ-axis follower 237 is provided on the side of the wrist joint 15.

According to the first embodiment, as hereinabove described, the T-axis rotation mechanism 120 is so formed as to rotate the hand 17 about the T-axis by rotating the arm end 16 about the T-axis, and the θ-axis rotation mechanism 130 is so formed as to transmit the driving force of the θ-axis motor 23 to the hand 17 by rotating the θ-axis follower 237 about the θ-axis in the structure in which the T-axis and the θ-axis are orthogonal to the B-axis while the B-axis rotation mechanism 110 rotates the hand 17 about the B-axis so that the T-axis and the θ-axis are rotated about the B-axis. According to this structure, the T-axis rotation mechanism 120 can reliably rotate the hand 17 about the T-axis, and the θ-axis rotation mechanism 130 can reliably transmit the driving force of the θ-axis motor 23 to the hand 17 even in the structure in which the T-axis and the θ-axis are rotated about the B-axis following the rotation of the hand 17 about the B-axis by the B-axis rotation mechanism 110.

According to the first embodiment, as hereinabove described, the θ-axis follower 237 of the θ-axis rotation mechanism 130 is provided inside the arm end 16 of the T-axis rotation mechanism 120 in the structure in which the T-axis and the θ-axis are arranged on the same axis. According to this structure, the arm end 16 and the θ-axis follower 237 can be easily rotated about the same axis (T-axis and θ-axis) while the arm end 16 and the θ-axis follower 237 are arranged in a space-saving manner.

According to the first embodiment, as hereinabove described, the θ-axis driving portion 235 of the θ-axis rotation mechanism 130 is rotated about the B-axis to rotate the θ-axis follower 237 about the θ-axis, and the T-axis driving portion 225 of the T-axis rotation mechanism 120 is rotated about the B-axis to rotate the arm end 16 about the T-axis. According to this structure, the θ-axis follower 237 can be easily rotated about the θ-axis orthogonal to the B-axis by the θ-axis driving portion 235 rotating about the B-axis, and the arm end 16 can be easily rotated about the T-axis orthogonal to the B-axis by the T-axis driving portion 225 rotating about the B-axis.

According to the first embodiment, as hereinabove described, the θ-axis motor 23, the B-axis motor 21, and the T-axis motor 22 are controlled by the common robot control apparatus 2. According to this structure, instruction clocks to the θ-axis motor 23, the B-axis motor 21, and the T-axis motor 22 can be easily matched by the common robot control apparatus 2, and hence operations of the B-axis rotation mechanism 110, the T-axis rotation mechanism 120, and the θ-axis rotation mechanism 130 can be easily coordinated. Consequently, the operating accuracy of the robot 1 can be improved.

According to the first embodiment, as hereinabove described, the robot 1 is so formed as to be capable of moving the hand 17 about the six axes and capable of transmitting the driving force of the θ-axis motor 23 provided in the second upper arm portion 142 to the hand 17. According to this structure, in the six-axis robot 1 having a high degree of freedom in movement of the hand 17, driving force for a gripping operation can be transmitted to the hand 17 while the weight of the robot 1 on the forward end side is reduced to inhibit reduction in the operating accuracy of the robot 1. According to the first embodiment, as hereinabove described, the θ-axis rotation mechanism 130 is so formed as to have a deceleration function at the meshing portion of the θ-axis driving portion 235 and the θ-axis follower 237, and the T-axis rotation mechanism 120 is so formed as to have a deceleration function at the meshing portion of the T-axis driving portion 225 and the arm end 16.
According to this structure, deceleration is enabled by the θ-axis rotation mechanism 130 and the T-axis rotation mechanism 120 without providing a speed reducer separately, and hence both torque causing the hand 17 to perform a gripping operation and torque causing the hand 17 to rotate about the T-axis can be easily increased.

According to the first embodiment, as hereinabove described, the θ-axis driving portion 235 of the θ-axis rotation mechanism 130 and the T-axis driving portion 225 of the T-axis rotation mechanism 120 are arranged on the same axis (B-axis), and the θ-axis follower 237 of the θ-axis rotation mechanism 130 and the arm end 16 of the T-axis rotation mechanism 120 are arranged on the same axis (θ-axis and T-axis). Furthermore, the θ-axis rotation mechanism 130 is so formed as to have a deceleration function at the meshing portion of the θ-axis driving portion 235 and the θ-axis follower 237, and the T-axis rotation mechanism 120 is so formed as to have a deceleration function at the meshing portion of the T-axis driving portion 225 arranged on the same axis as the θ-axis driving portion 235 and the arm end 16 arranged on the same axis as the θ-axis follower 237. According to this structure, both torque causing the hand 17 to perform a gripping operation and torque causing the hand 17 to rotate about the T-axis can be easily increased in the structure in which the θ-axis driving portion 235 and the θ-axis follower 237 are arranged on the same axis as the T-axis driving portion 225 and the arm end 16, respectively.

According to the first embodiment, as hereinabove described, the B-axis rotation mechanism 110 supports the θ-axis follower 237 of the θ-axis rotation mechanism 130 and the arm end 16 of the T-axis rotation mechanism 120 so as to allow the θ-axis follower 237 and the arm end 16 to rotate about the θ-axis and the T-axis, respectively. According to this structure, the θ-axis follower 237 and the arm end 16 can be rotated about the θ-axis and the T-axis while the B-axis rotation mechanism 110 stably supports the θ-axis follower 237 and the arm end 16.

According to the first embodiment, as hereinabove described, the θ-axis driving portion 235 of the θ-axis rotation mechanism 130 is arranged inside the T-axis driving portion 225 of the T-axis rotation mechanism 120. According to this structure, both the θ-axis driving portion 235 and the T-axis driving portion 225 can be easily rotated about the same axis (B-axis) while the θ-axis driving portion 235 and the T-axis driving portion 225 are arranged in a space-saving manner.

### (Second Embodiment)

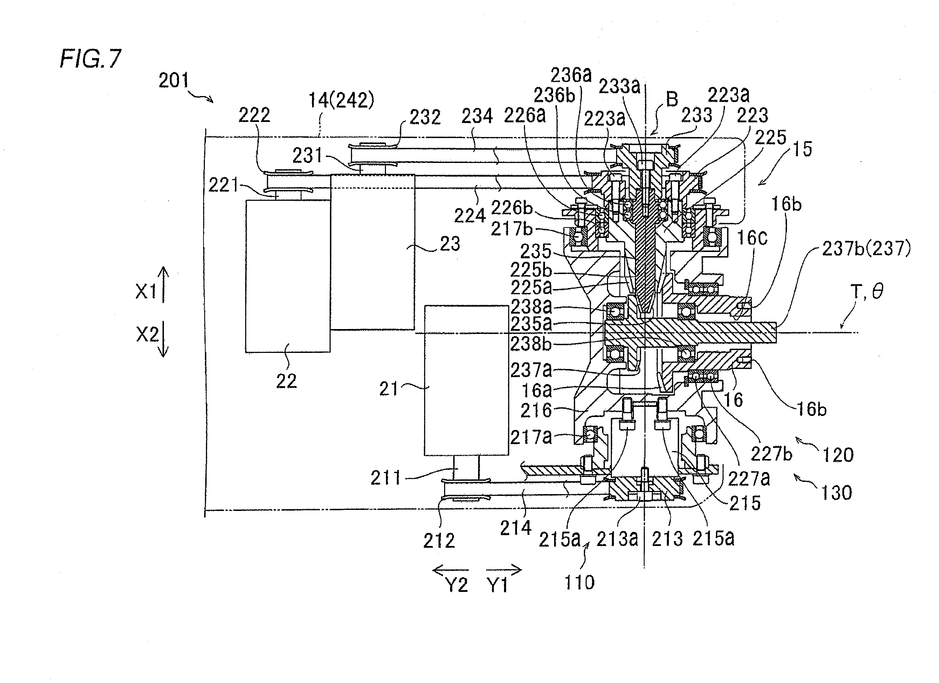

A second embodiment is now described with reference to Figs. 1 and 7. According to this second embodiment, a robot 201 includes no end effector, dissimilarly to the aforementioned first embodiment in which the robot 1 includes the hand 17. In the second embodiment, portions similar to those in the aforementioned first embodiment are denoted by the same reference numerals, to omit redundant description.

As shown in Fig. 7, the robot 201 according to the second embodiment includes no end effector, and is so formed that an end effector as an external component is mountable thereon. A B-axis motor 21 rotating the end effector as an external component mounted to an arm end 16 about a B-axis and a T-axis motor 22 rotating the end effector about a T-axis are provided inside a second upper arm portion 242, similarly to the aforementioned first embodiment. A θ-axis motor 23 to operate the end effector is further provided inside the second upper arm portion 242. The second upper arm portion 242 is an example of the "arm".

The remaining structure of the robot 201 according to the second embodiment is similar to that of the robot 1 according to the aforementioned first embodiment, as shown in Figs. 1 and 7. In other words, the robot 1 according to the aforementioned first embodiment from which the hand 17 has been detached is the robot 201 according to the second embodiment. Therefore, the robot 201 according to the second embodiment is a six-axis (S-axis, L-axis, U-axis, R-axis, B-axis, and T-axis) vertical articulated robot, includes no end effector, and includes a turn base 11, an arm support portion 12, a lower arm 13, an upper arm 14, a wrist joint 15, and the arm end 16.

According to the second embodiment, as hereinabove described, the θ-axis motor 23 to operate the end effector as an external component is provided in the second upper arm portion 242, whereby the weight of the robot 201 on the forward end side can be reduced to inhibit reduction in the operating accuracy of the robot 201, similarly to the aforementioned first embodiment.

The remaining effects of the second embodiment are similar to those of the aforementioned first embodiment.

### (Third Embodiment)

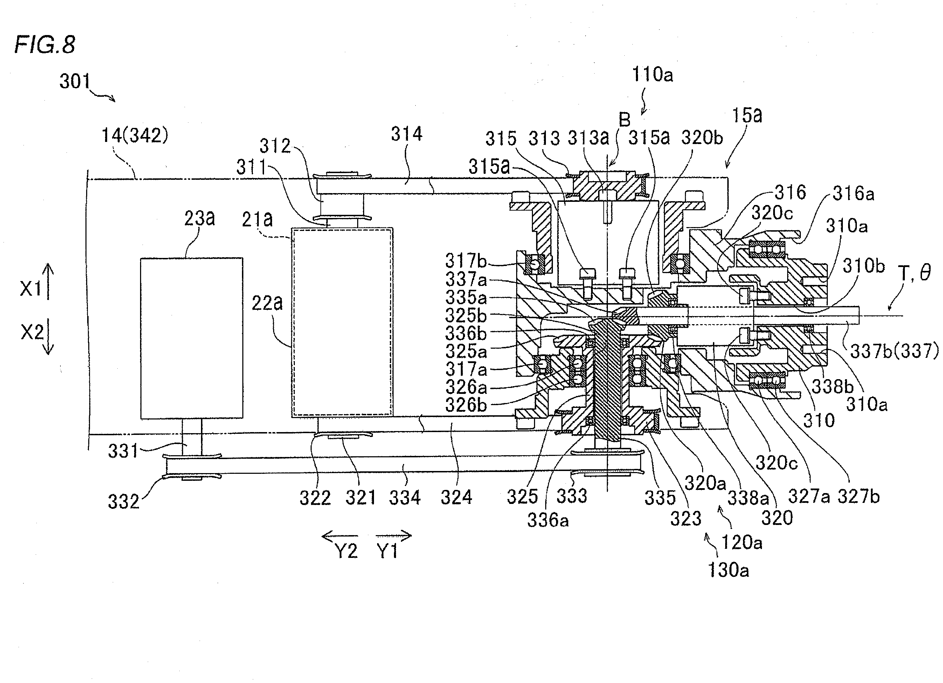

A third embodiment is now described with reference to Figs. 8 to 10. According to this third embodiment, bevel gears are employed in a wrist joint 15a, dissimilarly to the aforementioned first embodiment in which the hypoid gears (registered trademark) are employed in the wrist joint 15. The wrist joint 15a is an example of the "joint". In the third embodiment, portions similar to those in the aforementioned first embodiment are denoted by the same reference numerals, to omit redundant description.

As shown in Figs. 8 to 10, a B-axis motor 21a rotating a hand 17 (see Fig. 1) mounted to an arm end 310 about a B-axis and a T-axis motor 22a rotating the hand 17 about a T-axis are provided inside a second upper arm portion 342 according to the third embodiment. A θ-axis motor 23a to cause the hand 17 to perform a gripping operation is further provided inside the second upper arm portion 342. The B-axis motor 21a, the T-axis motor 22a, and the θ-axis motor 23a are arranged on the rear side (Y2 side) with respect to the wrist joint 15a in the second upper arm portion 342. The B-axis motor 21a, the T-axis motor 22a, and the θ-axis motor 23a each include a servomotor, and are so formed that driving thereof is controlled by a robot control apparatus 2 (see Fig. 1). The B-axis motor 21a, the T-axis motor 22a, and the θ-axis motor 23a are examples of the "first joint driving source", the "second joint driving source", and the "end effector driving source", respectively. The second upper arm portion 342 is an example of the "arm", and the B-axis and the T-axis are examples of the "first axis" and the "second axis", respectively.

### (B-Axis Rotation Mechanism)

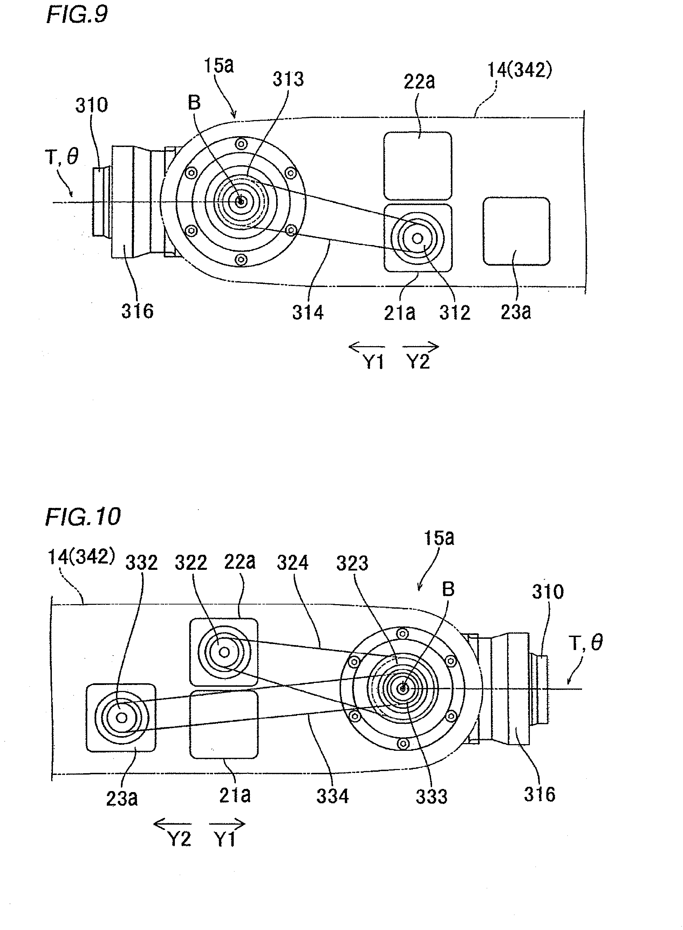

A pulley 312 is mounted on an output shaft 311 of the B-axis motor 21a, as shown in Fig. 8. As shown in Figs. 8 and 9, a transmission belt 314 circularly formed is wound on the pulley 312 and a pulley 313 rotating about the B-axis as a rotation axis. The pulley 313 is coupled to an input shaft (not shown) of a speed reducer 315 with a screw member 313a, as shown in Fig. 8. An output shaft (not shown) of the speed reducer 315 is coupled to a B-axis rotation portion 316 with screw members 315a. Thus, the driving force of the B-axis motor 21a is transmitted to the B-axis rotation portion 316 while the transmission speed thereof is reduced by the speed reducer 315. Annular bearings 317a and 317b are provided on respective ends of the B-axis rotation portion 316 in the extensional direction of the B-axis. The B-axis rotation portion 316 is supported by the bearings 317a and 317b to be rotatable about the B-axis (as a rotation axis) with respect to the second upper arm portion 342. Due to this structure, the B-axis rotation portion 316 is rotated about the B-axis (as a rotation axis) with respect to the second upper arm portion 342 by the driving force of the B-axis motor 21a. A B-axis rotation mechanism 110a is constituted mainly by the speed reducer 315 and the B-axis rotation portion 316, as described above. The B-axis rotation portion 316 has a recess portion 316a on the forward end side (Y1 side) of a robot 301. The B-axis rotation mechanism 110a is an example of the "first rotation mechanism".

### (T-Axis Rotation Mechanism)

A pulley 322 is mounted on an output shaft 321 of the T-axis motor 22a, as shown in Fig. 8. As shown in Figs. 8 and 10, a transmission belt 324 circularly formed is wound on the pulley 322 and a pulley 323 rotating about the B-axis as a rotation axis. The pulley 323 is formed integrally with a T-axis driving portion 325, as shown in Fig. 8. The T-axis driving portion 325 is arranged along the B-axis, and supported by annular bearings 326a and 326b to be rotatable about the B-axis (as a rotation axis) with respect to the second upper arm portion 342. Due to this structure, the T-axis driving portion 325 is rotated about the B-axis (as a rotation axis) with respect to the second upper arm portion 342 by the driving force of the T-axis motor 22a. The T-axis driving portion 325 is an example of the "second driving portion".

A substantially conical gear portion 325a is formed on a point of the T-axis driving portion 325. The gear portion 325a is so formed as to engage (mesh) with a substantially conical gear portion 320b formed on an end portion of an input shaft 320a of a speed reducer 320 described later. Specifically, the gear portion 325a and the gear portion 320b constitute a bevel gear. In other words, the rotation axis (T-axis) of the gear portion 320b of the input shaft 320a is located on the rotation axis (B-axis) of the gear portion 325a of the T-axis driving portion 325, as viewed from the axial direction of the T-axis. The gear portion 325a of the T-axis driving portion 325 is so formed as to engage with the gear portion 320b of the input shaft 320a on the forward end side (Y1 side in Fig. 8) of the robot 301 with respect to the rotation axis (B-axis). The input shaft 320a is an example of the "second follower". The T-axis driving portion 325 has a through-hole 325b penetrating in the extensional direction of the B-axis, and is formed in a hollow shape.

The speed reducer 320 has the input shaft 320a arranged along the T-axis orthogonal to the B-axis and an output shaft (not shown). The output shaft is coupled to the arm end 310 with screw members 320c. The speed reducer 320 has a function of reducing the rotation speed of the input shaft 320a and transmitting driving force to the arm end 310. Thus, the driving force of the T-axis motor 22a is transmitted to the arm end 310 while the transmission speed thereof is reduced by the speed reducer 320.

The arm end 310 is arranged along the T-axis orthogonal to the B-axis inside the recess portion 316a of the B-axis rotation portion 316, as shown in Fig. 8. The arm end 310 is supported by annular bearings 327a and 327b to be rotatable about the T-axis (as a rotation axis) with respect to the B-axis rotation portion 316. Due to this structure, the T-axis motor 22a rotates the T-axis driving portion 325 about the B-axis to rotate the arm end 310 about the T-axis through the speed reducer 320. Screw holes 310a to mount the hand 17 (see Fig. 1) are provided in the forward end of the arm end 310. The arm end 310 has a through-hole 310b penetrating in the extensional direction of the T-axis, and is formed in a hollow shape. A T-axis rotation mechanism 120a is constituted mainly by the T-axis driving portion 325, the speed reducer 320, and the arm end 310, as described above. The T-axis rotation mechanism 120a is an example of the "second rotation mechanism".

### (θ-Axis Rotation Mechanism)

A pulley 332 is mounted on an output shaft 331 of the θ-axis motor 23a, as shown in Fig. 8. As shown in Figs. 8 and 10, a transmission belt 334 circularly formed is wound on the pulley 332 and a pulley 333 rotating about the B-axis as a rotation axis. The pulley 333 is coupled to a θ-axis driving portion 335 with a screw member (not shown), as shown in Fig. 8. The θ-axis driving portion 335 is arranged along the B-axis inside the through-hole 325b of the T-axis driving portion 325. Furthermore, the θ-axis driving portion 335 is supported by annular bearings 336a and 336b to be rotatable about the B-axis (as a rotation axis) with respect to the T-axis driving portion 325. Due to this structure, the θ-axis driving portion 335 is rotated about the B-axis (as a rotation axis) with respect to the T-axis driving portion 325 by the driving force of the θ-axis motor 23a. The θ-axis driving portion 335 is an example of the "first driving portion".

A substantially conical gear portion 335a is formed on a point of the θ-axis driving portion 335. The gear portion 335a is so formed as to engage (mesh) with a substantially conical gear portion 337a formed on a θ-axis follower 337. Specifically, the gear portion 335a and the gear portion 337a constitute a bevel gear. In other words, the rotation axis (θ-axis) of the gear portion 337a of the θ-axis follower 337 is located on the rotation axis (B-axis) of the gear portion 335a of the θ-axis driving portion 335, as viewed from the axial direction of the T-axis. The rotation axis (T-axis) of the arm end 310 and the rotation axis (θ-axis) of the θ-axis follower 337 are located on the same axis. The gear portion 335a of the θ-axis driving portion 335 is so formed as to engage with the gear portion 337a of the θ-axis follower 337 on the forward end side (Y1 side in Fig. 8) of the robot 301 with respect to the rotation axis (B-axis). The θ-axis follower 337 is an example of the "first follower". The θ-axis is an example of the "third axis".

The θ-axis follower 337 is arranged along the θ-axis inside the through-hole 310b of the arm end 310. The θ-axis follower 337 is supported by annular bearings 338a and 338b to be rotatable about the θ-axis (as a rotation axis) with respect to the arm end 310 and the speed reducer 320. Due to this structure, the θ-axis motor 23a rotates the θ-axis driving portion 335 about the B-axis to rotate the θ-axis follower 337 about the θ-axis. A θ-axis rotation mechanism 130a is constituted mainly by the θ-axis driving portion 335 and the θ-axis follower 337, as described above. The θ-axis rotation mechanism 130a is an example of the "drive transmission mechanism". The θ-axis follower 337 has a connection portion 337b connected to the hand 17 in an end portion on the side provided with the hand 17 (Y1 side in Fig. 8). The connection portion 337b is exposed from the wrist joint 15a through the through-hole 310b of the arm end 310 when the hand 17 is not mounted. The connection portion 337b protrudes from the forward end of the arm end 310 toward the forward end side (Y1 side).

Due to the aforementioned structure, the B-axis motor 21a is so driven that the B-axis rotation portion 316 is rotated about the B-axis, followed by rotation of the arm end 310 and the θ-axis follower 337 about the B-axis. In other words, the B-axis rotation portion 316 is rotated about the B-axis to rotate the T-axis and the θ-axis about the B-axis. Thus, the hand 17 mounted to the arm end 310 is rotated about the B-axis by the driving force of the B-axis motor 21a. The T-axis motor 22a is so driven that the T-axis driving portion 325 is rotated about the B-axis, followed by rotation of the arm end 310 about the T-axis through the speed reducer 320. Thus, the hand 17 mounted to the arm end 310 is rotated about the T-axis by the driving force of the T-axis motor 22a. The θ-axis motor 23a is so driven that the θ-axis driving portion 335 is rotated about the B-axis, followed by rotation of the θ-axis follower 337 about the θ-axis. Thus, the driving force of the θ-axis motor 23a is transmitted to the hand 17 through the connection portion 337b. The B-axis rotation mechanism 110a, the T-axis rotation mechanism 120a, and the θ-axis rotation mechanism 130a can operate independently of each other.

The remaining structure of the robot 301 according to the third embodiment is similar to that of the robot 1 according to the aforementioned first embodiment.

According to the third embodiment, as hereinabove described, the θ-axis motor 23a to operate the hand 17 is provided in the second upper arm portion 342, whereby the weight of the robot 301 on the forward end side can be reduced to inhibit reduction in the operating accuracy of the robot 301, similarly to the aforementioned first embodiment.

According to the third embodiment, as hereinabove described, the speed reducer 320 is provided in the T-axis rotation mechanism 120a rotating the hand 17 about the T-axis in the structure in which the bevel gears are employed in the wrist joint 15a. According to this structure, the hand 17 can be rotated about the T-axis while the speed reducer 320 enables deceleration even in the structure in which no hypoid gear (registered trademark) having a high reduction ratio is employed.

The remaining effects of the third embodiment are similar to those of the aforementioned first embodiment.

Although the present invention has been described and illustrated in detail, it is clearly understood that the same is by way of illustration and example only and is not to be taken by way of limitation, the spirit and scope of the present invention being limited only by the terms of the appended claims.

For example, while the vertical articulated robot is shown as an example of the robot according to the present invention in each of the aforementioned embodiments, the present invention is not restricted to this. The present invention can be applied to a robot other than the vertical articulated robot.

While the hand performing a gripping operation is shown as an example of the end effector in the present invention in each of the aforementioned embodiments, the present invention is not restricted to this. In the present invention, an end effector such as a welding torch or a polishing tool, other than the hand may alternatively be employed.

While the θ-axis motor serving as the end effector driving source in the present invention is provided in the second upper arm portion (arm) in each of the aforementioned embodiments, the present invention is not restricted to this. In the present invention, the end effector driving source may alternatively be provided in the joint.

While the B-axis motor serving as the first joint driving source in the present invention and the T-axis motor serving as the second joint driving source in the present invention are provided in the second upper arm portion (arm) in each of the aforementioned embodiments, the present invention is not restricted to this. In the present invention, the first joint driving source and the second joint driving source may alternatively be provided in the joint, or one of the first joint driving source and the second joint driving source may alternatively be provided in the arm while the other of the first joint driving source and the second joint driving source may alternatively be provided in the joint.

While the θ-axis motor including a servomotor is shown as an example of the end effector driving source in the present invention in each of the aforementioned embodiments, the present invention is not restricted to this. In the present invention, the end effector driving source may alternatively be a driving source including no servomotor as long as the same is a driving source to operate the end effector. In this case, not only a driving source rotatingly driving the end effector but also a driving source linearly driving the end effector, such as an air cylinder may alternatively be employed.

While the wrist joint capable of operating about the two axes of the B-axis and the T-axis is shown as an example of the joint in the present invention in each of the aforementioned embodiments, the present invention is not restricted to this. A joint operating about a single axis may alternatively be employed, or a joint operating about more than two axes may alternatively be employed.

## Claims

1. A robot comprising:
an arm (142, 242, 342);
a joint (15, 15a) provided on one end portion of the arm; and
an end effector driving source (23, 23a) operating an end effector (17) mounted to the arm through the joint, provided in at least either the arm or the joint.

2. The robot according to claim 1, wherein
at least either the arm or the joint is provided with a joint driving source (21, 21a, 22, 22a) to operate the joint.

3. The robot according to claim 2, wherein
the joint driving source includes a first joint driving source (21, 21a) and a second joint driving source (22, 22a), and
the end effector driving source, the first joint driving source, and the second joint driving source are provided in the arm.

4. The robot according to claim 3, further comprising a drive transmission mechanism (130, 130a) transmitting driving force of the end effector driving source to the end effector, wherein
at least a part of the drive transmission mechanism is provided in the joint.

5. The robot according to claim 4, wherein
the joint is provided with a first rotation mechanism (110, 110a) rotating the end effector about a first axis by driving force of the first joint driving source and a second rotation mechanism (120, 120a) rotating the end effector about a second axis by driving force of the second joint driving source in addition to at least the part of the drive transmission mechanism.

6. The robot according to claim 4 or 5, wherein
the drive transmission mechanism is so provided that at least a portion thereof connected to the end effector is exposed from the joint.

7. The robot according to claim 5, wherein
the drive transmission mechanism includes a first driving portion (235, 335) provided on a side of the end effector driving source and a first follower (237, 337) rotated about a third axis by the first driving portion,
the second axis and the third axis are substantially orthogonal to the first axis while the first rotation mechanism rotates the end effector about the first axis, so that the second axis and the third axis are rotated about the first axis,
the second rotation mechanism includes a second driving portion (225, 325) provided on a side of the second joint driving source and a second follower (16) rotated about the second axis by the second driving portion, and is so formed that the second follower rotates about the second axis to rotate the end effector about the second axis, and
the drive transmission mechanism is so formed that the first follower rotates about the third axis to transmit the driving force of the end effector driving source to the end effector.

8. The robot according to claim 7, wherein
the second axis and the third axis are arranged on a same axis, and
at least either the first follower of the drive transmission mechanism or the second follower of the second rotation mechanism is provided inside either the second follower or the first follower so that the first follower and the second follower are rotatable about the same axis.

9. The robot according to claim 8, wherein
the first driving portion of the drive transmission mechanism rotates about the first axis to rotate the first follower about the third axis, and
the second driving portion of the second rotation mechanism rotates about the first axis to rotate the second follower about the second axis.

10. The robot according to any one of claims 1 to 9, being a multi-axis robot capable of moving the end effector about six axes and capable of transmitting driving force of the end effector driving source provided in at least either the arm or the joint to the end effector.

11. The robot according to any one of claims 7 to 9, wherein
the drive transmission mechanism has a deceleration function at a meshing portion of the first driving portion and the first follower, and
the second rotation mechanism has a deceleration function at a meshing portion of the second driving portion and the second follower.

12. The robot according to claim 11, wherein
the first driving portion of the drive transmission mechanism and the second driving portion of the second rotation mechanism are arranged on a same axis,
the first follower of the drive transmission mechanism and the second follower of the second rotation mechanism are arranged on a same axis,
the drive transmission mechanism has a deceleration function at the engaging portion of the first driving portion and the first follower, and
the second rotation mechanism has a deceleration function at the engaging portion of the second driving portion arranged on the same axis as the first driving portion and the second follower arranged on the same axis as the first follower.

13. The robot according to any one of claims 7 to 9, wherein
the first rotation mechanism supports the first follower of the drive transmission mechanism and the second follower of the second rotation mechanism so as to allow the first follower and the second follower to rotate about the third axis and the second axis, respectively.

14. The robot according to claim 9, wherein
at least either the first driving portion of the drive transmission mechanism or the second driving portion of the second rotation mechanism is arranged inside either the second driving portion or the first driving portion.

15. The robot according to any one of claims 1 to 14, further comprising an end effector mounted to the arm through the joint.
